# EUROPEAN PATENT APPLICATION

(11) **EP 3 053 814 A1**
(43) Date of publication of application: **10.08.2016**
(21) Application number: 15170188.5
(22) Date of filing: 02.06.2015
(51) Int. Cl.: B62J 3/00, B62J 11/00

(54) **BOTTLE FOR USE IN A BOTTLE HOLDER MOUNTED ON A BICYCLE**

(30) Priority: 06.06.2014 NL 2012958
(71) Applicant: Rombouts, Winfried Adrianus Cornelus Maria, 6413 AX Heerlen (NL)
(72) Inventor: Rombouts, Winfried Adrianus Cornelus Maria, 6413 AX Heerlen (NL)
(74) Representative: Verhees, Godefridus Josephus Maria

(57) **Abstract**

A water bottle (1) comprises a side wall (7) that has such a shape that a hollow (17) pointing inwards is formed. This hollow accommodates a bicycle bell (12) which is integrated with the water bottle.

The bicycle bell (12) comprises a sound body (13) in the form of a dish which is present on a pin (18) mounted to the side wall and does not protrude beyond the side wall (7) around the hollow (17). The bicycle bell (12) further includes a clapper (15) which is connected to the side wall via a spring-mounted arm (21). The clapper (15) is provided with an operation element (19) which protrudes beyond the side wall (7) of the water bottle around the hollow (17).

The clapper (15) can be moved away from the sound body against a spring force. When the clapper (15) is released, it will then strike against the sound body.

## Description

### Field of the invention

The invention relates to a water bottle for use in a water bottle cage installed on a bicycle, comprising a side wall, a bottom and a closable drink opening.

A bicycle is provided with a bicycle bell to draw the attention of other road users, usually other cyclists, to the fact that one wishes to overtake. This bicycle bell is usually installed on the handlebars of the bicycle. Racing bikes, on the other hand, are usually not equipped with a bicycle bell because it is in the way on the handlebars if one wishes to ride with the hands on the handlebars or because it is awkward to operate if it is installed somewhere else, for example, on the handlebar stem or the head tube. If racing cyclists want to overtake other cyclists they usually call and often yell, to let the other cyclists know that they wish to overtake.

### State of the art

A water bottle of this type is generally known and on a racing bicycle it is accommodated in a water bottle cage which is fitted to the down tube or against the seat tube. As a result, the water bottle can easily be taken from the water bottle cage and put back into the water bottle cage again.

### Summary of the invention

It is an object of the invention to find a solution for enhancing road safety without this being detrimental to a racing cyclist's ease of cycling. To this end the water bottle according to the invention is characterized in that the water bottle is provided with a sound body, as well as a clapper which can be struck against the sound body and is movable against a spring force. In consequence, a racing bicycle can be provided with a bicycle bell that is not in the way and can be operated in a relatively simple manner, so that it is no longer necessary to shout or yell much in advance to other cyclists one wishes to overtake, but the bell can be rung so that the person ahead knows that somebody is coming who wishes to overtake.

The clapper can be struck against the sound body by first moving the clapper against a spring force away from the sound body and then releasing it or by striking the clapper against the sound body against the spring force and then releasing it.

The water bottle with integrated bicycle bell thus obtained can be used by a left-handed person as well as a right-handed person. The place taken up by the bicycle bell is relatively small so that there is still ample space left for a drink in the water bottle. The water bottle could be manufactured for for example the water bottle cage which is already present on many bicycles anyway or be manufactured for a new water bottle cage specially designed for this purpose.

The sound body can be formed by the water bottle or at any rate part of its side wall or by a plate fitted to the side wall. Preferably, however, the sound body is formed by a dish and the side wall of the water bottle has such a shape that a hollow pointing inwards is formed which accommodates the dish.

Preferably, also the clapper is situated in the hollow so that it does not protrude in a cumbersome way.

An embodiment of the water bottle according to the invention is characterized in that the clapper is provided with or connected to an operation element which protrudes beyond the side wall of the water bottle around the hollow. As a result, the bicycle bell can be operated in a simple manner.

Preferably, the dish does not protrude beyond the side wall around the hollow, so that the water bottle can easily be inserted into existing water bottle cages.

### Brief description of the drawings

The invention will be described below in more detail based on an example of embodiment of the water bottle according to the invention represented in the drawing figures, in which:
Fig. 1 shows a bicycle provided with a water bottle cage containing a invented water bottle on the down tube;
Fig. 2 shows the bicycle shown in Fig. 1 but now showing the water bottle cage against the seat tube;
Fig. 3 shows an embodiment of the water bottle according to the invention accommodated in a water bottle cage; and
Fig. 4 shows a sectional view of the water bottle along the line IV-IV in Fig. 3.

### Detailed description of the drawings

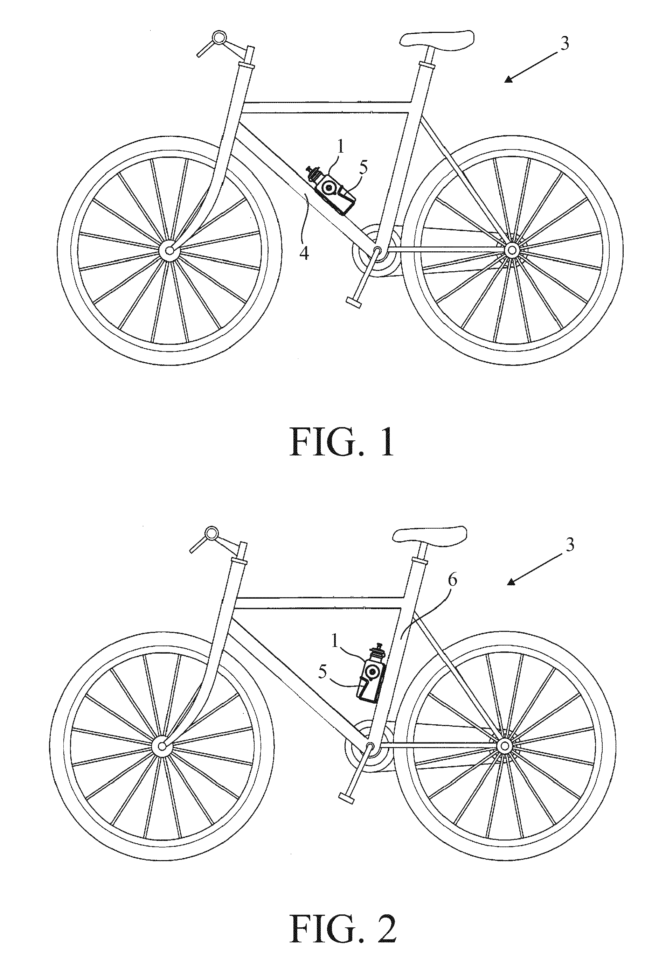

Figs 1 and 2 show a bicycle 3 provided with a water bottle cage 5 containing a water bottle 1 according to the invention, where the water bottle cage 5 is fitted to the down tube 4 or the seat tube 6 respectively.

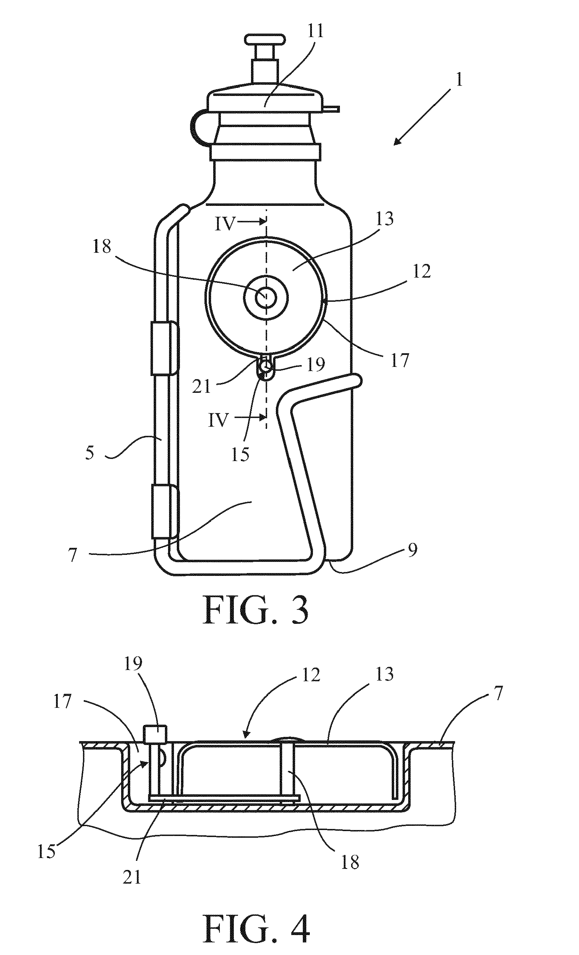

Fig. 3 shows the water bottle 1 accommodated in the water bottle cage 5 and Fig. 4 shows a section of the water bottle along line IV-IV in Fig. 3. The water bottle 1 comprises a side wall 7, a bottom 9 and a closable drink opening 11. The side wall 7 has such a shape that a hollow 17 pointing inwards is formed. This hollow lodges a bicycle bell 12 which is integrated with the water bottle.

The bicycle bell 12 comprises a sound body 13 shaped as a dish which is present on a pin 18 mounted to the side wall and does not protrude beyond the side wall 7 around the hollow 17. The bicycle bell 12 further includes a clapper 15 which is connected to the side wall via a spring-mounted arm 21. The clapper 15 is also lodged substantially completely in the hollow 17 and is provided with an operation element 19 that protrudes beyond the side wall 7 of the water bottle around the hollow 17. The clapper 15 can be moved away from the sound body against a spring force. When the clapper 15 is released, it will then strike against the sound body.

Albeit the invention has been described in the foregoing based on the drawing figures, it should be observed that the invention is not by any manner or means restricted to the embodiment shown in the drawing figures. The invention also extends to all embodiments deviating from the embodiment shown in the drawing figures within the scope defined by the claims.

## Claims

1. A water bottle (1) for use in a water bottle cage (5) installed on a bicycle (3), comprising a side wall (7), a bottom (9) and a closable drink opening (11), **characterized in that** the water bottle (1) is provided with a sound body (13), as well as a clapper (15) which can be struck against the sound body and is movable against a spring force.

2. A water bottle as claimed in claim 1, **characterized in that** the sound body (13) is formed by a dish and the side wall of the water bottle has such a shape that a hollow (17) pointing inwards is formed which accommodates the dish.

3. A water bottle as claimed in claim 2, characteriozed in that also the clapper (15) is situated in the hollow (17).

4. A water bottle as claimed in claim 3, **characterized in that** the clapper (15) is provided with or connected to an operation element (19) which protrudes beyond the side wall (7) of the water bottle around the hollow (17).

5. A water bottle as claimed in claim 2, 3 or 4, **characterized in that** the dish does not protrude beyond the side wall (7) around the hollow (17).
